# EUROPEAN PATENT APPLICATION

(11) **EP 1 919 195 A2**
(43) Date of publication of application: **07.05.2008**
(21) Application number: 07112263.4
(22) Date of filing: 11.07.2007
(51) Int. Cl.: H04N 5/00, H04N 7/16

(54) **Image Processing Apparatus And Control Method Thereof**

(30) Priority: 12.09.2006 KR 20060088256
(71) Applicant: SAMSUNG ELECTRONICS CO., LTD., Suwon-si, Gyeonggi-do (KR)
(72) Inventor: LEE, A-lum, Seoul (KR)
(74) Representative: Clark, David James

(57) **Abstract**

A image processing apparatus includes a storage unit (150) which stores user data related to a service information item; a receiver (110) which receives a broadcasting signal comprising a service application; a transmitter (112) which transmits the user data in response to the service application; and a controller (160) which edits the user data in the storage unit (150) independently of performance of the service application if a user desires to edit the user data in the storage unit (150).

## Description

Apparatuses and methods consistent with the present invention relates to image processing apparatus and control methods thereof.

An image processing apparatus or a display device (hereinafter, referred to as an image processing apparatus), such as a TV, a set-top box, etc., processes broadcasting signals to display images.

The broadcasting signals inputted to the image processing apparatus are changing from analog to digital. Recently, technologies for digital TV broadcasting have been developed rapidly. The foregoing technologies, for example, include various specifications such as the OpenCable Application Platform (OCAP) for interactive data broadcasting in North America, the Multimedia Home Platform (MHP) (a European standard), etc. The foregoing specifications envision that various interactive applications may be developed and various services which are feasible only for a personal computer (PC) may be provided to the image processing apparatus, thereby developing an integrated image processing apparatus where broadcasting and communication are united.

Various service applications which are performed by a JAVA application are downloaded to the image processing apparatus according to the foregoing specifications. The service applications include an electronic program guide (EPG), applications linked to an information providing service or a broadcasting program and interactive applications including e-commerce or e-mail.

The image processing apparatus performs the downloaded service application that a broadcaster provides or recommends a specific function to a user. In the MHP specification, information related to the user is defined as User Preference (hereinafter, referred to as service information), and the service application may provide better service using the service information. In the MHP specification, data on the service information inputted by performance of the service application is stored in a storage unit to be used for other service applications.

However, the image processing apparatus does not include a specification by which the user can control the data of the service information using a host control program or the like. If the user inputs private data as part of the service information, e.g. a user name, a user e-mail and a user address for on-line ordering, the service application stores the foregoing information in the storage unit without asking the user's intention as to use of the data, and the data may be leaked by an authorized service application regardless of the user's intention. On the contrary, if such frequently used service information is not stored in the storage unit, the user must input it repeatedly.

Example embodiments of the invention aim to address at least one disadvantage of the prior art, whether identified herein, or otherwise.

In a first aspect of the present invention there is provided an image processing apparatus comprising: a storage unit which stores user data related to a service information item; a receiver which receives a broadcasting signal comprising a service application; a transmitter which transmits the user data in response to the service application; and a controller which edits the user data in the storage unit independently of performance of the service application if a user desires to edit the user data in the storage unit.

Suitably, the controller operates a menu task of a host control program to interface that the user data in the storage unit is edited by the user.

Suitably, the image processing apparatus further comprises a user interface part, wherein the controller stores the user data related to the correspondent service information item in the storage unit if the user data in the storage unit is edited by the user through the user interface part.

Suitably, the image processing apparatus further comprises a display, wherein the controller displays the service information item and the user data in the storage unit on the display.

Suitably, the controller displays at least one of a user language, a user name, a user address, a user e-mail and a parental rating in the service information item on the display.

Suitably, the controller further comprises a delete-all menu which deletes all the user data stored in the storage unit and displayed on the display.

Suitably, the controller further displays a check area for the user to select whether to permit disclosure of the user data displayed on the display.

Suitably, the controller stores user data related to a correspondent service information item as the user data related to a user control item if one of the service information items is equal to the user control item used for the host control program.

Suitably, the controller stores user data related to a correspondent service information item as the user data related to the user control item if one of the service information items is equal to the user control item used for the host control program and the user data related to the user control item is required to change equally through a user interface part.

Suitably, the service application is provided as a Java application.

In a second aspect of the present invention there is provided a control method of an image processing apparatus which receives and processes a broadcasting signal comprising a service application, comprising: storing user data related to a service information item in a storage unit; and editing the user data in the storage unit independently of performance of the service application if a user desires to edit the user data in the storage unit.

Suitably, the editing operation operates a menu task of a host control program to interface that the user data in the storage unit is edited by the user.

Suitably, the editing operation further comprises displaying the service information item and the user data in the storage unit on a display.

Suitably, the displaying operation displays at least one of a user language, a user name, a user address, a user e-mail and a parental rating in the service information item on the display.

Suitably, the displaying operation further comprises a delete-all menu which deletes all the user data stored in the storage unit and displayed on the display.

Suitably, the editing operation further comprises storing user data related to a correspondent service information item in the storage unit if the user data related to the service information item is edited through a user interface part.

Suitably, the editing operation further comprises storing user data related to a correspondent service information item as the user data related to a user control item if one service information item is the same as the user control item used for the host control program.

Suitably, the editing operation further comprises storing user data related to a correspondent service information item as the user data related to the user control item if one of the service information items is the same as the user control item used for the host control program and the user data related to the user control item is required to be changed through the user interface part.

Suitably, the control method of the image processing apparatus further comprises transmitting the user data in response to the service application if the user data required by the service application is all stored in the storage unit.

Suitably, the transmitting operation further comprises transmitting the user data in the storage unit which is permitted for disclosure in response to the service application.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram to illustrate a configuration of an image processing apparatus according to an exemplary embodiment of the present invention;
FIG. 2 is a hierarchical view of software running on the controller in FIG. 1;
FIG. 3A is a flow chart to schematically illustrate a control method of an image processing apparatus according to an exemplary embodiment of the present invention;
FIG. 3B is a flow chart to illustrate the control method of the image processing apparatus according to an exemplary embodiment of the present invention;
FIG. 4 is a flow chart to illustrate a control method by service application of the image processing apparatus according to an exemplary embodiment of the present invention; and
FIG. 5 illustrates an example of a screen configuration to display service information items as realized by an exemplary embodiment of the present invention.

Reference will now be made in detail to the embodiments of the present invention, examples of which are illustrated in the accompanying drawings.

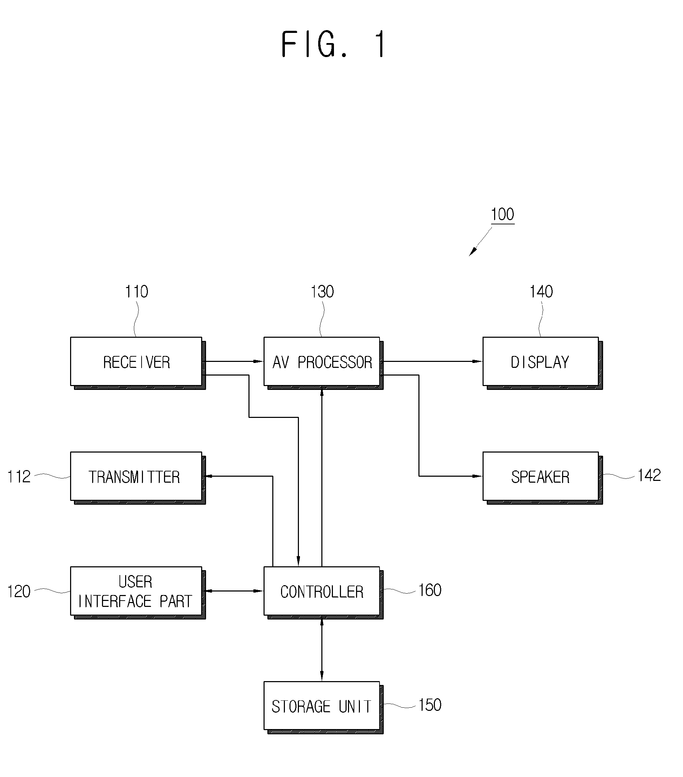

FIG. 1 is a block diagram illustrating a configuration of an image processing apparatus 100 according to an exemplary embodiment of the present invention

The image processing apparatus 100 processes a broadcasting signal to produce an audio/video (AV) signal. In the present embodiment, the broadcasting signal includes a digital TV broadcasting signal for wireless or cable digital TV broadcasting. In this case, the image processing apparatus 100 may be provided as a digital TV or a set-top box for a digital TV which is capable of receiving and processing the digital TV broadcasting signal. Referring to FIG. 1, the image processing apparatus 100 generally includes a receiver 110, a transmitter 112, a user interface part 120, an AV processor 130, a storage unit 150 and a controller 160. The digital TV further includes a display 140 and a speaker 142 in addition to the foregoing elements.

The receiver 110 receives the broadcasting signal which a broadcaster transmits. Namely, the receiver 110 receives the broadcasting signal of a channel selected by a user according to control by the controller 160. The receiver 110 selects a channel at a frequency corresponding to the selected channel to receive the correspondent broadcasting signal, and separates and outputs the AV signal and a service application.

The transmitter 112 transmits data responsive to performance of the service application by transmitting user data about a plurality of service information items to the broadcaster. Generally, the transmitter 112 includes a modem. The transmitter 112 for the cable digital TV broadcasting system may include a tuner for transmission.

The user interface part 120 receives a user's command in operation of the image processing apparatus 100 and delivers the user's command to the controller 160. The user interface part 120 may be provided as a button key (not shown) disposed on the image processing apparatus 100, a remote controller (not shown), etc., or may have a configuration to detect control data provided from an external device.

The AV processor 130 processes an audio signal and a video signal received by the receiver 110 according to control by the controller 160. Processes include decoding, improving an image quality, scaling to adjust the size of an image, etc.

The display 140 displays an image of video data which is processed by the AV processor 130. The display 140 may include a liquid crystal display (LCD) panel, a plasma display panel (PDP), etc.

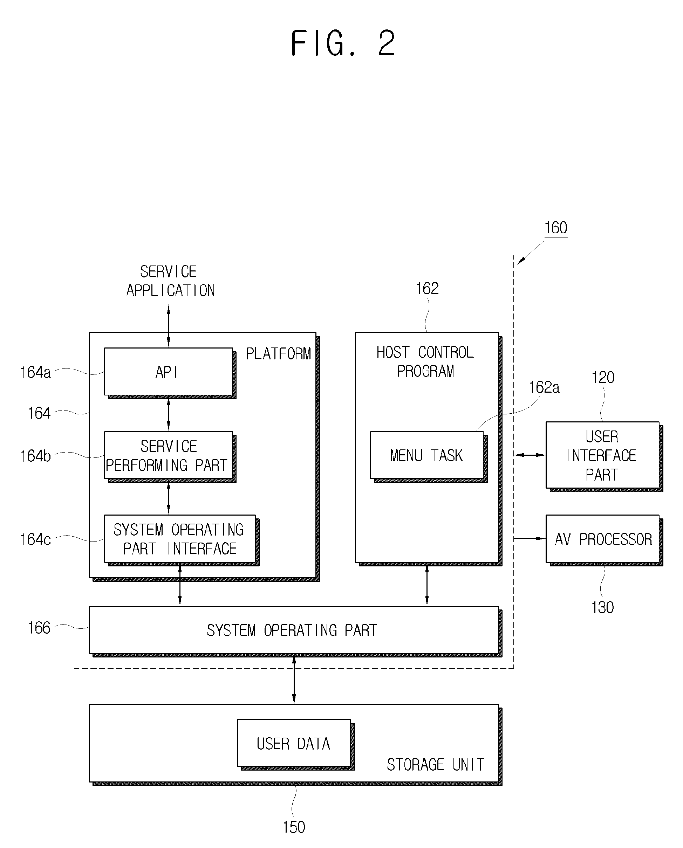

The storage unit 150 stores the user data related to the plurality of service information items which an authorized service application may store and use. In the MHP specification, the service information items include a user language, a user name, a user address, a user e-mail, parental rating, a font size, and a country code. Further, the storage unit 150 stores a user control item which the user may control, i.e., the user data on the parental rating which is set by the user to control the image processing apparatus and the host control program 162 illustrated in FIG. 2, independent of the service application. The storage unit 150 may be provided as a nonvolatile memory.

The controller 160 controls the image processing apparatus 100 overall. FIG. 2 shows the hierarchy of the software to illustrate the controller 160 in FIG. 1 in detail. The controller 160 includes three classes such as a platform 164, a system operating part 166 and a processor (not shown). The platform 164 does not directly operate the processor of the system part. Thus, the system operating part 166 functions as middleware between the platform 164 and the processor. The system operating part 166 is also referred as a native implementation.

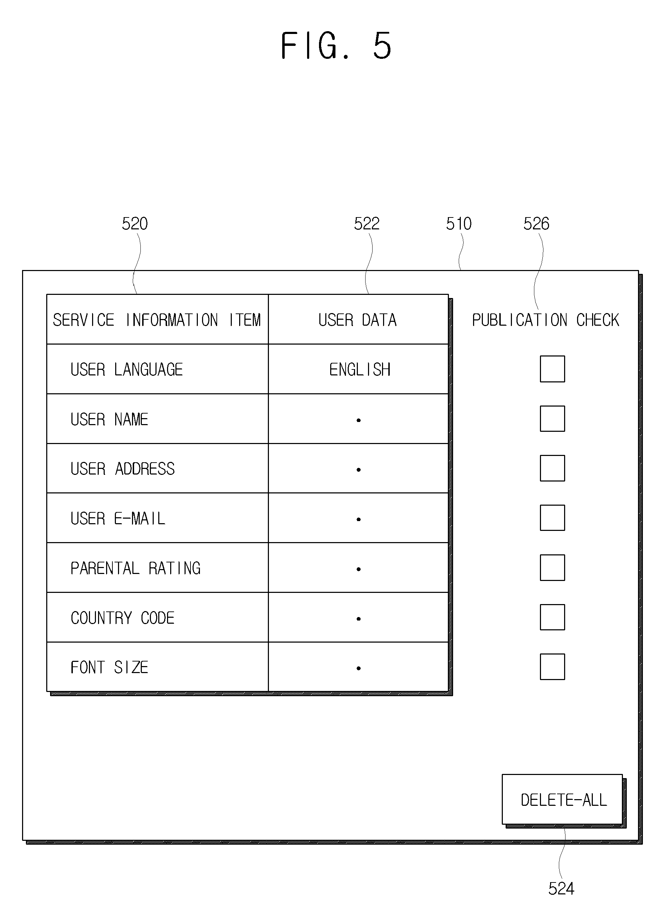

The controller 160 controls the receiver 110, the AV processor 130, etc. based on the host control program 162. For example, the controller 160 controls the AV processor 130 to process the input AV signal on the basis of the host control program 162. Meanwhile, a menu task 162a in the host control program 162 is a program provided to the user to control a screen size, video, audio, etc. In the present embodiment, the menu task 162a provides a service information editing screen 510 illustrated in FIG. 5 so that the user may edit the user data about the plurality of service information items. The controller 160 reads the host control program 162 stored in the storage unit 150 to perform the foregoing operation.

The controller 160 operates on the basis of the service application separated and outputted from the receiver 110. The service application is for a data broadcasting service provided from the broadcaster. While operating according to the host control program 162, the controller 160 performs the service application and operates a correspondent service based on the commands in the service application if the broadcasting signal includes the service application. A service application Xlet may be performed by a Java application.

The platform 164 includes an application programming interface (API) 164a, a service performing part 164b and a system operating part interface 164c to perform the service application. The API 164a provides various functions to efficiently perform the service application regardless of the host control program 162. The service performing part 164b, also referred to as a Java implementation, is a Java implementation part to provide a Java API function. The system operating part interface 164c is a layer to provide host-dependent functions and information needed for the service performing part 164b and to interface with the system operating part 166.

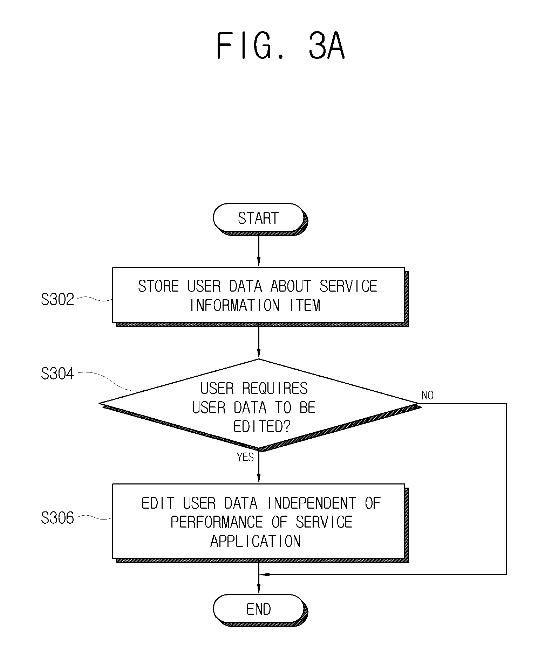

FIG. 3A is a flow chart to schematically illustrate a control method of the image processing apparatus receiving the broadcasting signal including the service application according to the exemplary embodiment of the present invention.

The image processing apparatus 100 stores the user data about the service information items inputted according to the command of the service application in the storage unit 150 (S302). Then, it is determined whether the user desires to edit the user data of the service information items in the storage unit 150 (S304). If the user requires to edit the user data, the user data is edited independently of performance of the service application (S306).

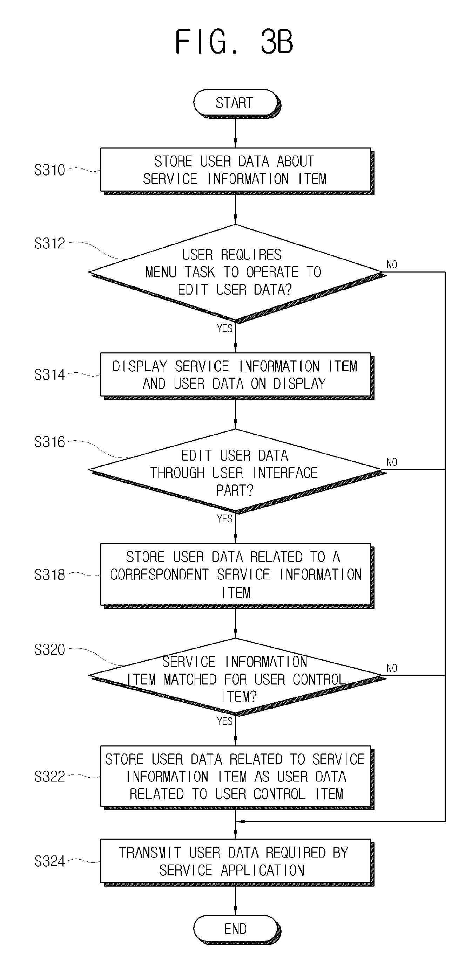

Hereinafter, the control method of the image processing apparatus according to the exemplary embodiment of the present invention will be described in detail with reference to FIG. 3B.

The image processing apparatus 100 stores the user data of the service information items inputted according to the command of the service application in the storage unit 150 (S310). The host control program 162 of the controller 160 determines whether the user requires to operate the menu task 162a of the host control program 162 to edit the user data stored in the storage unit 150 (S312). If the menu task 162a is required to operate, the host control program 162a of the controller 160 displays the user data on the display 140 (S314). As illustrated in FIG. 5, the service information editing screen 510 displays the service information items 520 such as a user language, a user name, a user e-mail, parental rating, a font size and a country code, and displays a user data area 522 to input user data on the item. Further, the service information editing screen 510 displays a delete-all menu 524 to delete all the user data. Also, the service information editing screen 510 displays a check area 526 for the user to check off items permitted to be publically disclosed. The service information editing screen 510 may be provided variously to select one of a plurality of languages or to input different names of a plurality of family members regarding the user name.

The host control program 162 of the controller 160 determines whether the user data is edited through the user interface part 120 (S316). That is, the host control program 162 determines whether the user data is inputted, changed or deleted through the user interface part 120 in the user data area 522 of the service information editing screen 510. Particularly, the host control program 162 deletes all the user data in the service information items displayed on the display 40 if the delete-all menu 524 is selected through the user interface part 120. If the user data corresponding to the service information items 520 is edited by the user, the storage unit 150 stores the edited user data. (S318).

Meanwhile, the user data on the service information items may be edited not only directly by the user but also by checking the check area selecting whether to permit the user data to be disclosed. In this case, a separate area is provided in the storage unit 150 to store the user data on the service information items displayed on the display 140. Namely, only marked user data not prohibited from disclosure to the public is stored, from among the user data on the service information items used by the service application.

Further, the image processing apparatus 100 according to the present embodiment determines whether one of the service information items is consistent with the user control item (S320). That is, if the parental rating of the service information items is equal to the parental rating of the user control item, user data related to a correspondent service information item may be stored in the storage unit 150 as the user data related to the user control item (S322). In this case, if one of the service information items is equal to the user control item, and the user data related to the user control item is required to be changed equally through the user interface part 120, the user data related to a correspondent service information item may be stored in the storage unit 150 in operation S322.

The controller 160 transmits the user data related to the service information items stored by the host control program 162 to the broadcaster in response to the service application (S324).

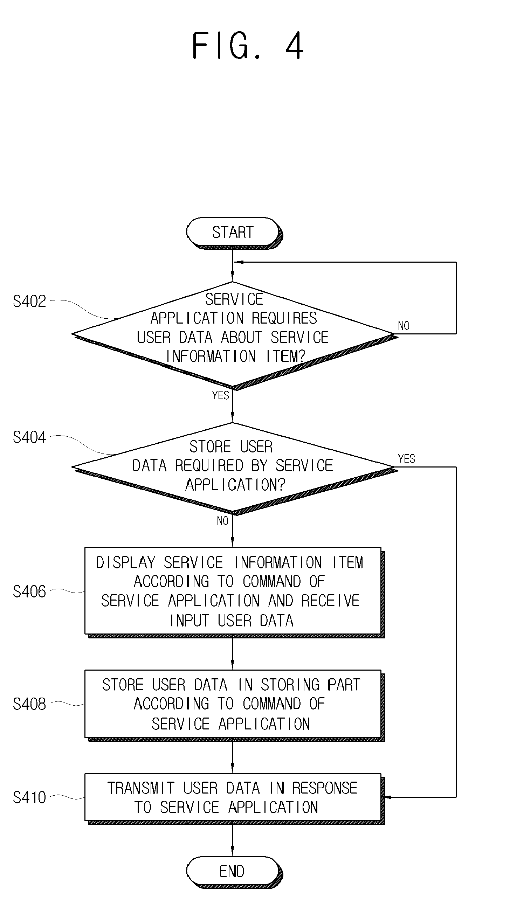

A control method of the image processing apparatus 100 according to the present embodiment executed by the service application, i.e.,a process where the user data related to the service information items stored by the host control program 162 is transmitted to the broadcaster in response to the service application, will be described with reference to FIG. 4.

The receiver 110 receives the broadcasting signal of a channel selected by a user and separately outputs an AV signal and service application according to control by the controller 160. The controller 160 receives the service application through the API 164a and performs it. In this case, the controller 160 determines whether the service application requires user data related to the service information item 520 (S402), and determines whether the user data required by the service application is stored in the storage unit 150 (S404).

If user data related to service information items 520 according to performance of a specific service application or edition by the user stored in the storage unit 150 does not correspond with all service information items 520 required by the service application, the display 140 displays the unfilled required service information items 520 and the receiver 110 receives the missing user data related to the service information item 520 (S406). Then, the storage unit 150 stores the user data related to the inputted service information item according to a command of the service application (S408).

If all the user data related to the service information items required by the service application are stored in the storage unit 150 or inputted through the user interface part 120, the controller 160 transmits the user data through the transmitter 112 in response to the service application (S410). In this case, the controller 160 may transmit only that user data which is set to be open in the storage unit 150 in response to the service application.

According to the present invention described above, a user may control data of service information directly, thereby preventing undesired disclosure of personal data.

Further, information the user permits to be disclosed is stored to be used for further repeated input.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
a storage unit (150) operable to store user data related to a service information item;
a receiver (110) operable to receive a broadcasting signal comprising a service application;
a transmitter (112) operable to transmit the user data in response to the service application; and
a controller (160) operable to edit the user data in the storage unit independently of performance of the service application if a user desires to edit the user data in the storage unit (150).

2. The image processing apparatus according to claim 1, wherein the controller (160) is operable to operate a menu task of a host control program to provide an interface such that the user data in the storage unit is editable by the user.

3. The image processing apparatus according to claim 1 or 2, further comprising a user interface part (120), wherein the controller (160) is operable to store the user data related to the correspondent service information item in the storage unit (150) if the user data in the storage unit (150) is edited by the user through the user interface part (120).

4. The image processing apparatus according to claim 1, 2 or 3, further comprising a display (140), wherein the controller (160) is operable to display the service information item and the user data in the storage unit (150) on the display (140).

5. The image processing apparatus according to claim 4, wherein the controller (160) is operable to display at least one of: a user language, a user name, a user address, a user e-mail and a parental rating in the service information item on the display (140).

6. The image processing apparatus according to any preceding claim, wherein the controller (160) further comprises a delete-all menu operable to delete all the user data stored in the storage unit (150).

7. The image processing apparatus according to claim 4, or of claims 5 or 6 as dependent on claim 4, wherein the controller (160) is operable to further display a check area for the user to select whether to permit disclosure of user data displayed on the display (140).

8. The image processing apparatus according to any preceding claim, wherein the controller (160) is operable to store user data related to a correspondent service information item as the user data related to a user control item if one of the service information items is the same as the user control item used for the host control program.

9. The image processing apparatus according to any preceding claim, wherein the controller stores user data related to a correspondent service information item as the user data related to the user control item if one of the service information items is the same as the user control item used for the host control program and the user data related to the user control item is required to be changed to be the same through a user interface part (120).

10. The image processing apparatus according to any preceding claim, wherein the service application is provided as a Java application.

11. A control method of an image processing apparatus which receives and processes a broadcasting signal comprising a service application, comprising:
storing user data related to a service information item in a storage unit (S302); and
editing the user data in the storage unit independently of performance of the service application if a user desires to edit the user data in the storage unit (S304, S306).

12. The control method of the image processing apparatus according to claim 11, wherein the editing operates a menu task of a host control program to interface that the user data in the storage unit is edited by the user (S312).

13. The control method of the image processing apparatus according to claim 11 or 12, wherein the editing further comprises displaying the service information item and the user data in the storage unit on a display (S314).

14. The control method of the image processing apparatus according to claim 11, 12 or 13, wherein the displaying operation displays at least one of a user language, a user name, a user address, a user e-mail and a parental rating in the service information item on the display.

15. The control method of the image processing apparatus according to claim 11, 12, 13 or 14, wherein the displaying operation further comprises displaying a delete-all menu which deletes all the user data stored in the storage unit and displayed on the display.

16. The control method of the image processing apparatus according to any one of claims 11-15, wherein the editing further comprises storing user data related to a correspondent service information item in the storage unit if the user data related to the service information item is edited through a user interface part (S316, S318).

17. The control method of the image processing apparatus according to any one of claims 11-16, wherein the editing further comprises storing user data related to a correspondent service information item as user data related to a user control item if one service information item is the same as the user control item used for the host control program (S320, S322).

18. The control method of the image processing apparatus according to any one of claims 11-17, wherein the editing further comprises storing user data related to a correspondent service information item as the user data related to the user control item if one of the service information items is equal to the user control item used for the host control program and the user data related to the user control item is required to be changed to be the same through the user interface part (S402-S408).

19. The control method of the image processing apparatus according to any one of claims 11-18, further comprising transmitting the user data in response to the service application if the user data required by the service application is all stored in the storage unit (S410).

20. The control method of the image processing apparatus according to claim 19, wherein the transmitting operation further comprises transmitting the user data in the storage unit which is permitted for disclosure in response to the service application.
